Europäisches Patentamt

European Patent Office

Office européen des brevets

(11) Publication number: **0 207 522**
**A2**

# (12) EUROPEAN PATENT APPLICATION

(21) Application number: **86109123.9**

(22) Date of filing: **04.07.86**

(51) Int. Cl.4: **H01M 10/36**

(30) Priority: **04.07.85 JP 145789/85**

(43) Date of publication of application:
. **07.01.87 Bulletin 87/02**

(84) Designated Contracting States:
**AT DE FR GB IT**

(71) Applicant: **Kabushiki Kaisha Meidensha**
**1-17, Ohsaki 2-chome**
**Shinagawa-ku Tokyo 141(JP)**

(72) Inventor: **Ando, Yasuo**
**10-9, Kamirenjaku 5-chome**
**Mitaka-shi Tokyo(JP)**

(74) Representative: **Dipl.-Phys.Dr. Manitz Dipl.-Ing.**
**Finsterwald Dipl.-Ing. Grämkow**
**Dipl.-Chem.Dr. Heyn Dipl.-Phys.Rotermund,**
**B.Sc. Morgan Robert-Koch-Strasse 1**
**D-8000 München 22(DE)**

(54) **Rotary zinc-bromine secondary battery.**

(57) In a zinc-bromine secondary battery, the battery body or the battery electrodes are rotated during charge and/or discharge operation to eliminate the arrangement of any electrolyte circulating system. Since the bromine complex is appropriately diffused on the electrode surfaces, the battery energy efficiency can be improved without producing zinc dendrite and increasing the overvoltage. The rotational speed of the battery is 2 r.p.m. or more where the electrode diameter is about 40 cm.

FIG. I
( PRIOR ART )

( IN CHARGE )

$Zn^{++} + 2e \longrightarrow Zn \quad 2Br^- \longrightarrow Br_2 + 2e \quad ZnBr_2 \longrightarrow Zn + Br_2$

EP 0 207 522 A2

# ROTARY ZINC-BROMINE SECONDARY BATTERY

## BACKGROUND OF THE INVENTION

### Field of the Invention

The present invention relates generally to a rotary zinc-bromine secondary battery and more specifically to a hermetic bipolar zinc-bromine secondary battery including no electrolyte circulating system. The above battery is small in size and light in weight so as to be applicable to a power source for electric vehicles, for instance.

### Description of the Prior Art

Zinc-bromine secondary batteries of electrolyte circulation type have recently been developed as a battery for storing excessive electric power at night. This is because the zinc-bromine secondary battery is high in energy density and battery efficiency and further the battery active materials Zn and Br₂ are rich in natural resources and therefore low in cost. Further, it has been excepted that the zinc-bromine secondary battery is usable as a power source for electric vehicles in addition to the use as batteries for storing excessive electric power at night.

The features of the zinc-bromine secondary battery of electrolyte circulation type are as follows: (1) The negative and positive electrode active materials ($Zn^{++}$ and $Br^-$) are adjustable in quantity according to the electrolyte volume of negative and positive electrolyte tanks and thereby it is possible to control the charge or discharge duration time. - (2) The zinc can be relatively uniformly electrodeposited onto the negative electrode of the battery. (3) The overvoltage due to electrochemical reaction is relatively low at both the negative and positive electrodes during both charge and discharge operations.

In the above zinc-bromine secondary battery of electrolyte circulation type, however, since the battery should be provided with an electrolyte circulating system made up of electrolyte tanks, piping systems, pumps, etc., there exist problems in that the electrolyte circulating system is complicated in structure, large in volume, heavy in weight, and therefore high in cost. In particular, where the battery is mounted on an electric vehicle, a great mounting space is inevitably required.

To overcome the above-mentioned problems, it may be possible to use zinc-bromine secondary batteries of static electrolyte type, in place of the batteries of electrolyte circulation type. In these batteries of static electrolyte type, however, other problems will arise such that (1) zinc dendrite will readily be produced on the negative electrode because the electrolyte is not circulated, and therefore the charge-discharge cycle time the battery is markedly reduced, and (2) the electrochemical overvoltage increases at both the negative and positive electrodes during charge or discharge operation.

The arrangement of the prior art zinc-bromine secondary battery of electrolyte circulation type will be described in further detail with reference to the attached drawing under DETAILED DESCRIPTION OF THE PREFERRED EMBODIMENTS.

## SUMMARY OF THE INVENTION

With these problems in mind, therefore, it is the primary object of the present invention to provide a rotary zinc-bromine secondary battery which can eliminate the disadvantages or shortcomings involved in the static electrolyte battery in spite of the fact that no electrolyte circulating system such as tanks, piping systems, pumps, etc. is incorporated therewith.

To achieve the above-mentioned object, the zinc-bromine secondary battery according to the present invention is characterized in that the electrolyte is hermetically put within the battery body and the battery is rotated during charge and/or discharge operation.

The rotational speed of the battery is 1000 r.p.m. or more in the case where the electrode diameter is about 1 cm. However, the rotational speed of the battery is 2 r.p.m or more in the case where the electrode diameter is about 40 cm.

Further, without rotating the entire battery, it is also possible to rotate only the electrodes during charge and/or discharge operation.

To facilitate uniform rotation of the electrolyte, it is preferable to form the battery body or the electrode, in particular, in cylindrical or circular shape.

Any kinds of material may be usable as the electrodes; however, in the embodiments, an electrically conductive plastic electrode is adopted. Further, only the positive electrodes are covered by a porous sheet fabric of active carbon fibers made from a phenol resin fiber.

## BRIEF DESCRIPTION OF THE DRAWINGS

The features and advantages of the rotary zinc-bromine secondary battery according to the present invention over the prior-art zinc-bromine secondary battery of electrolyte circulation type will be more clearly appreciated from the following description of the preferred embodiments of the invention taken in conjunction with the accompanying drawings in which like reference numerals designate the same or similar elements or sections throughout the figures thereof and in which:

Fig. 1 is a diagrammatical cross-section view of a conventional zinc-bromine secondary battery of electrolyte circulation type for assistance in explaining the structure thereof;

Fig. 2 is a perspective view showing a first embodiment of the rotary zinc-bromine secondary battery of the present invention;

Fig. 3 is a lateral cross-sectional view of the secondary battery shown in Fig. 2;

Fig. 4 is a longitudinal cross-sectional view of the secondary battery shown in Fig. 2, taken along the line IV-IV shown in Fig. 3;

Fig. 5 is a diagrammatical perspective view of an example of battery rotating means for rotating the secondary battery shown in Fig. 2;

Fig. 6 is a graphical representation showing the relationship between the charge/discharge duration time and the battery voltage of the rotary secondary battery according to the present invention in comparison with that of the static secondary battery;

Fig. 7 is a graphical representation showing the relationship between the rotational speed of the secondary battery of the present invention and the electrochemical overvoltages at the negative and positive electrodes during the discharge operation;

Fig. 8 is a lateral cross-sectional view of a second embodiment of the rotary zinc-bromine secondary battery of the present invention;

Fig. 9 is a longitudinal cross-sectional view of the secondary battery taken along the lines IX-IX shown in Fig. 8; and

Fig. 10 is a graphical representation showing the relationship between the rotational speed of the secondary battery shown in Figs. 8 and 9 of the present invention and the battery energy efficiency during the charge and/or discharge operation.

## DETAILED DESCRIPTION OF THE PREFERRED EMBODIMENTS

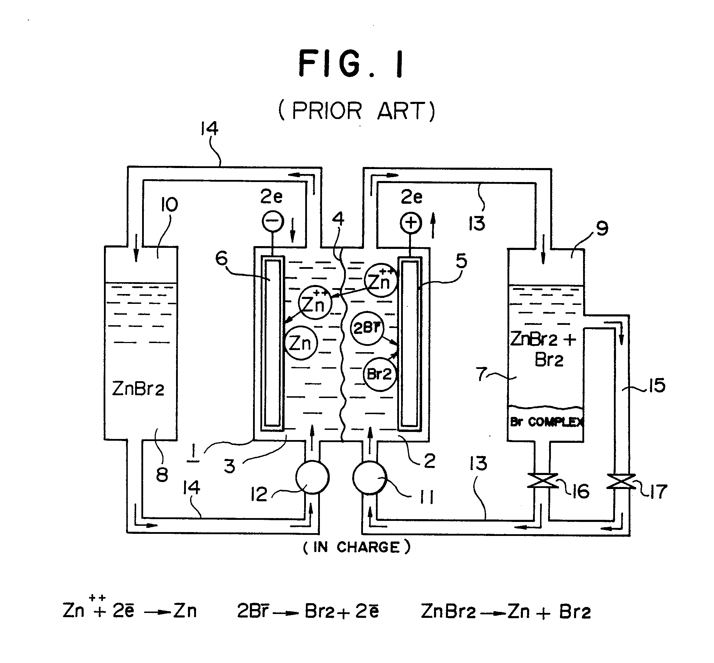

To facilitate understanding of the present invention, a brief reference will be made to a well-known zinc-halogen secondary battery. Fig. 1 shows a zinc-bromine secondary battery having a unit cell. In the drawing, the reference numeral 1 denotes a unit secondary cell; the numeral 2 denotes a positive electrode chamber; the numeral 3 denotes a negative electrode chamber; the numeral 4 denotes an ion-permeable electrolyte-impermeable separator (membrane) for separating the positive electrode chamber 2 from the negative electrode chamber 3 or vice versa; the numeral 5 denotes a positive electrode; the numeral 6 denotes a negative electrode; the numeral 7 denotes a positive electrolyte; the numeral 8 denotes a negative electrolyte. Each of these electrolytes 7 and 8 is put in each of two positive and negative electrolyte tanks 9 and 10. The reference numerals 11 and 12 denote pumps arranged in an electrolyte circulation pipe system 13 between the positive electrode chamber 2 and the positive electrolyte tank 9 and in an electrolyte circulation pipe system 14 between the negative electrode chamber 3 and the negative electrolyte tank 10, respectively. The numeral 15 denotes a positive electrolyte bypass pipe system, and the numerals 16 and 17 denote valves.

In the above-mentioned battery structure, when the battery is charged with the valve 16 closed and the valve 17 open, the two pumps 11 and 12 are driven to circulate both the electrolytes 7 and 8 through both the electrolyte circulation pipe systems 13, 14 and 15 in the directions as shown by the arrows, respectively. Therefore, a reaction of $Zn^{++} + 2e^- \rightarrow Zn$ is produced at the negative electrode 6, and a reaction of $2Br^- \rightarrow Br_2 + 2e^-$ is produced at the positive electrode 5. The bromine produced at the positive electrode 5 is mixed with the positive electrolyte 7 in the form of molecule. A part of the molecule is resolved into the positive electrolyte 7 and the major part of the molecule is precipitated and accumulated in the positive electrolyte tank 9 in the form of bromine complex due to a bromine complexing agent included in the positive electrolyte 7. On the other hand, zinc electrodeposited at the negative electrode 6 is accumulated as it is onto the negative electrode 6.

When the battery is discharged with the valve 16 open and the valve 17 closed, reactions opposite to the above-mentioned reaction formulas are produced at each electrode 5 or 6 under the condition that the electrolytes are circulated in the directions shown by the arrows and the above deposition substances (Zn, Br₂) are consumed - (oxidized or reduced) at each electrode 5 or 6 to generate electrical energy.

In the above description, the secondary battery having a single cell has been explained for facilitating understanding of the structure of the secondary battery. However, in plactice, a plurality of secondary cells are stacked in series to form a battery according to a voltage required.

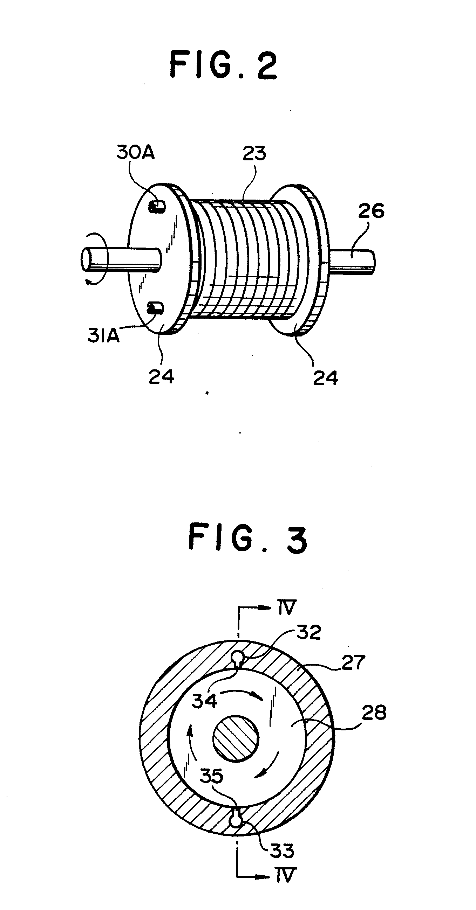

In view of the above description, reference is now made to the first embodiment of the rotary zinc-bromine secondary battery according to the present invention with reference to the attached drawings. This first embodiment described with reference to Figs. 2 to 7 is a basic or an experimental embodiment with a small electrode diameter of 1 cm. Further, the number of the cells stacked in this battery is ten.

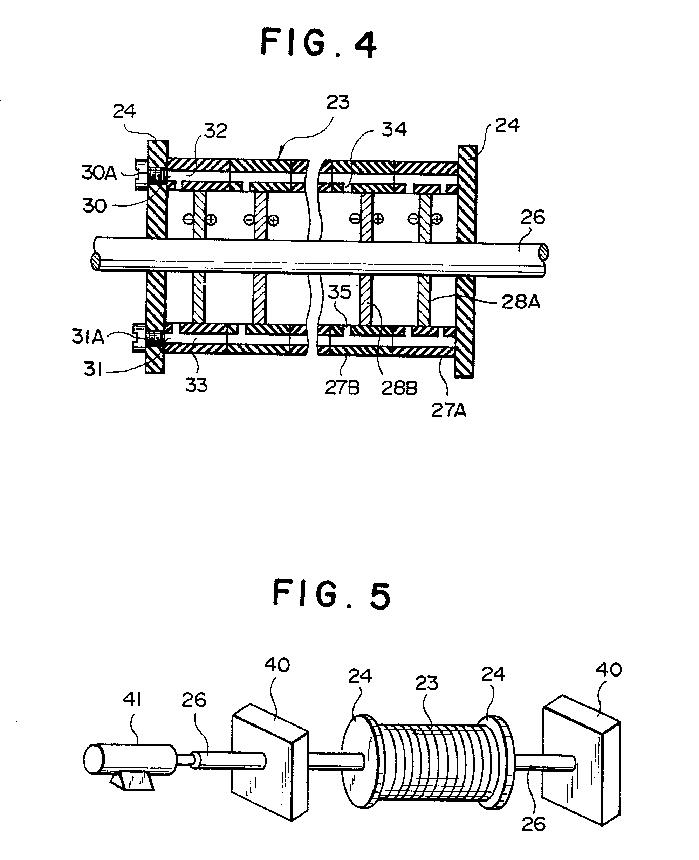

In Fig. 2, the battery is roughly composed of a circular battery body 23 made up of ten secondary cells, two battery support plates 24, and a rotating shaft 26. As shown in Figs. 3 and 4, each cell includes an annular electrically insulating cell frame 27A, 27B, ... and a circular bipolar electrode 28A, 28B .... supported by the cell frame 27, respectively. One surface of the electrode is operative as a positive electrode, while the other surface of the electrode is operative as a negative electrode. The bipolar electrodes 28 are made of an electrically conductive plastic material (carbon plastics). In more detail, the carbon plastic electrode is formed by mixing a polyolefine resin with graphite or carbon black, kneading the mixture and molding it into an appropriate electrode shape. The above polyolefine resin such as high density polyethylene is suitable to mass production process, not expensive in cost and resistant against bromine (positive electrode active material).

In this experimental type, there is provided no separator between the two adjacent bipolar electrodes 28. Therefore, a positive electrolyte and a negative electrolyte are put together from an electrolyte inlet port 30 having a stopcock 30A, through an inlet common manifold 32 formed in the annular insulating cell frames 27, into the spaces formed between the two adjacent bipolar electrodes 28. Further, the two electrolytes can be removed together from an electrolyte outlet port 31 having a stopcock 31A, through an outlet common manifold 33 formed in the annular insulating cell frames 27. Further, as shown in Figs. 3 and 4, the above inlet and outlet common manifolds 32 and 33 communicate with each space (each electrode chamber) formed between two adjacent bipolar electrodes through a plurality of inlet or outlet channels 34 or 35.

The rotating shaft 26 is fixedly attached to the two side battery support plates 24 and the plural bipolar electrodes 28 passing therethrough. Therefore, when the rotating shaft 26 is rotated, the whole battery body 23 can be rotated and the electrolytes can be rotated in the direction as shown by arrows in Fig. 3. However, it is also possible to rotate only the plural bipolar electrodes 28 by the rotating shaft 26. In this case, the shaft 26 is rotatably but sealably supported by the two side battery support plates 24 and is fixed to the plural bipolar electrodes 28. Further, each of the plural electrodes 28 is also rotatably and sealably supported by each of the plural annular insulating cell frames 27.

Fig. 5 shows an example of battery rotating means. The rotating shaft 26 is rotatably supported by two battery supporting members 40 each including a bearing for permitting the battery to rotate more smoothly. The rotating shaft 26 is connected to a drive shaft of a motor 41 as shown. The battery body and the electrodes are preferably cylindrical or circular in shape because the electrolytes can move smoothly within the cells when rotated.

The test results of the basic embodiment as explained above will be described according to when the battery is at rest (static battery) and when rotated (rotary battery) hereinbelow. The electrolyte hermetically put in the rotary zinc-bromine secondary battery includes an aqueous solution of $Zn\ Br_2$ and a bromine complexing agent. The battery is charged or discharged for 8 hours at a current density of 20 mA/cm². Table 1 below lists voltaic efficiency ($V_{eff}$), coulombic efficiency ($C_{eff}$) and battery energy efficiency ($E_{eff}$).

Table 1

|  | $V_{eff}$ (%) | $C_{eff}$ (%) | $E_{eff}$ (%) |
|---|---|---|---|
| Static | 72 | 71 | 51 |
| Rotary | 79 | 77 | 61 |

In Table 1, $V_{eff}$ is a ratio of discharge voltage to charge voltage; $C_{eff}$ is a ratio of discharge current to charge current; and $E_{eff}$ is $V_{eff} \times C_{eff}$.

The above table 1 indicates that the battery energy efficiency $E_{eff}$ can be improved by about 10% when the battery is rotated as compared with when not rotated.

After the above charge/discharge tests, the battery was disassembled for observations. When the battery is rotated during charge, zinc is more uniformly electrodeposited onto the negative electrode without producing prominent dendrite.

Further, the reason why the coulombic efficiency $C_{eff}$ is high when the battery is rotated may be due to the fact that the rotation of the electrolyte improves the uniformity of zinc solubility.

Further, since the bromine deposited on the positive electrode produces bromine complex in reaction with the bromine complexing agent, when the battery is rotated, it is possible to consider that the bromine complex can securely react upon the positive electrode. On the other hand, when the battery is not rotated, the bromine complex is precipitated at the bottom of the electrode chambers without effectively reacting upon the positive electrode.

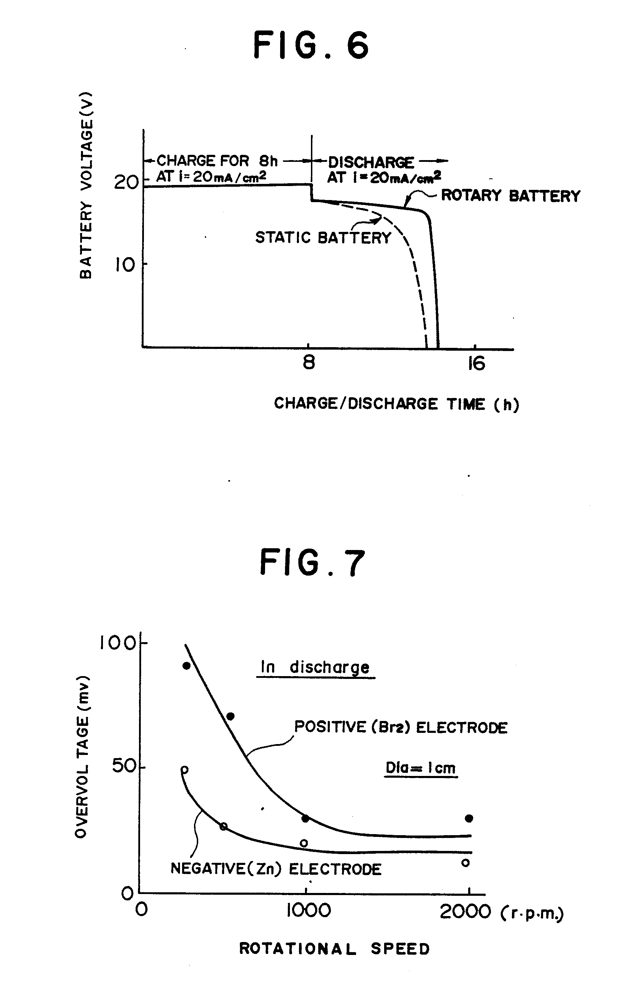

Fig. 6 clearly indicates that the charge and discharge characteristics of a rotary battery (when rotated) are fairly improved as compared those of a static battery (when not rotated) in spite of the fact that the charging conditions of both are the same.

Fig. 7 shows the relationship between the electromchemical overvoltage and the rotational speed of the battery during discharge operation. The overvoltage is a difference in voltage between theoretical potential and practical potential at each electrode during discharge. In usual, the practical potential is higher than the theoretical potential at the positive electrode but lower than the theoretical potential at the negative electrode. The smaller the overvoltage is, the preferable will be the battery.

Fig. 7 indicates the overvoltage can be reduced when the rotational speed is 100 rpm or more. Further, the overvoltage is lower at the negative electrode than at the positive electrode. However, the effect of rotation of the battery upon the overvoltage is prominent at the positive electrode.

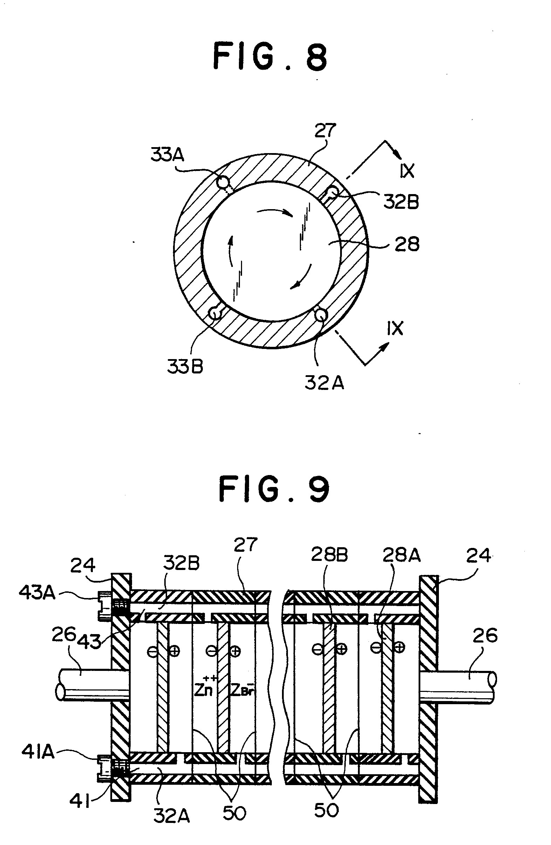

With reference to Figs. 8 to 10, a second embodiment of the rotary zinc-bromine battery according to the present invention will be described. This embodiment is a practical embodiment with a large electrode diameter of about 40 cm. The number of cells stacked in this battery is ten in the same way as in the first embodiment.

Being different from the first embodiment shown in Fig. 4, the rotating shaft 26 is not passed through the battery body 23 or the bipolar electrodes 28 but fixed to the two battery support plates to rotate the entire battery body, as depicted in Fig. 9. In the same way as in the first embodiment, the bipolar electrodes 28 are made of carbon plastics. However, only the positive electrode side thereof is adhesively covered by a porous sheet fabric of active carbon fibers made from a phenol resin fiber (ACC 507-15 of NIHON KAINOLE CO., LTD) by use of a heat press machine.

Further, being different from the first embodiment, shown in Fig. 4, plural ion-permeable electrolyte-impermeable separators 50 (Hi-Pore of ASHAHI KASEI CO., LTD) are sandwiched between two annular insulating cell frames 27, as shown in Fig. 9.

Therefore, a positive electrolyte is put from a positive electrolyte inlet port 41 having a stopcock 41A, through a positive electrolyte inlet common manifold 32A formed in the annular electrically insulating cell frame 27, into the spaces (positive electrode chambers) formed between the separator 50 and the positive electrode side of the bipolar electrode 28. On the other hand, a negative electrolyte is put from a negative electrolyte inlet port 43 having a stopcock 43A, through a negative electrolyte inlet common manifold 32B formed in the annular insulating cell frame 27, into the spaces (negative electrode chambers) formed between the separator 50 and the negative electrode side of the bipolar electrode 28. Further, the two electrolytes can be removed separately from positive and negative outlet ports (not shown), through a positive electrolyte outlet common manifold 33A or a negative electrolyte outlet common manifold 33B both formed in the annular insulating cell frame 27. Further, as shown in Figs. 8 and 9 all the above-mentioned positive inlet and outlet common manifolds 32A and 33A communicate with each positive electrode chamber through a plurality of inlet channels; and the above-mentioned negative inlet and outlet common manifolds 32B and 33B communicate with each negative electrode chamber through a plurality of outlet channels.

The battery stack as shown in Fig. 9 can be rotated by an appropriate rotating means as shown in Fig. 5. Further, in the case where the battery according to the present invention is mounted on an electric vehicle, another battery rotating means is provided on the vehicle and driven by a driven shaft of the vehicle dc motor.

The test results of the practical embodiment as explained above will be described according to when the battery is at rest (static battery) and when rotated (rotary battery). The positive and negative electrolytes hermetically put in the rotary zinc-bromine secondary battery include $Zn\,Br_2$ and a bromine complex agent. The battery is charged or discharged for 8 hours at a current density of 20 $mA/cm^2$.

Table 2 below lists battery energy efficiency - ($E_{eff}$).

| Charge | Static | Rotary | Static | Rotary |
|--------|--------|--------|--------|--------|
| Discharge | Static | Static | Rotary | Rotary |
| $E_{ff}$ (%) | 65 | 68 | 72 | 78 |

Rotative speed (2 r.p.m.)

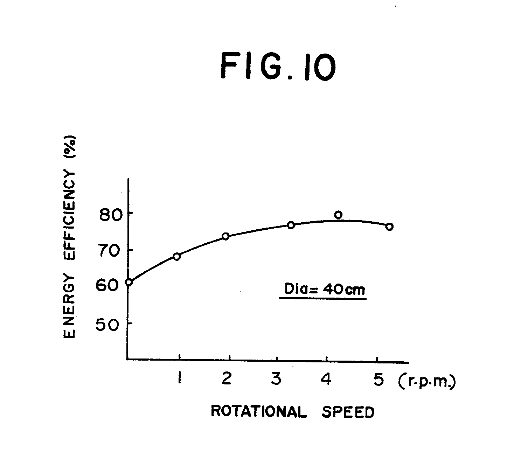

Further, Fig. 10 shows the relationship between the energy efficiency $E_{ff}$ (%) and the rotational speed of the battery during charge operation.

Fig. 10 indicates that the battery efficiency is improvbed up to about 78% when the battery body is rotated at a speed of 2 r.p.m. or more. Further, table 2 indicates that the battery efficiency is improved more when the battery is rotated during discharge operation (up to 72%) than when rotated during charge operation (up to 68%).

In comparision between the first embodiment - (basic experimental model with an electrode diameter of 1 cm) and the second embodiment - (practical model with an electrode diameter of 40 cm), the considerations are as follows:

(1) In the first embodiment, the electrochemical overvoltage decreases when the rotational speed is 1000 r.p.m. or more. However, in the second embodiment, the battery efficiency can be improved when the rotational speed is as low as 2 r.p.m. or more. This is because in the second embodiment, an increase in electrochemical overvoltage is relatively small and the battery rotation is effective mainly upon the diffusion of bromine complex rather than upon the overvoltage.

(2) When comparing the effect of the rotary battery between charge operation and discharge operation, the effect is prominent during discharge operation. This is because, when the battery is at rest, heavy bromine complex is precipitated at the bottom of the positive electrode chambers and therefore it is impossible to effectively utilize the upper portion of the positive electrodes. On the other hand, even during the charge operation, where the heavy zinc ion, bromine ion, bromine complexing agent and bromine complex are precipitated at the bottom of the electrode chambers, there exist problems such that the electrolyte electric resistance uniformly increases; as a result, the current distribution is disturbed and therefore zinc and bromine are not uniformly and effectively electrodeposited on the negative and positive electrodes. In any way, an increase in effect of the rotary battery during the discharge operation indicates that the rotation of the battery is closely related to the diffusion of bromine complex. In other words, when the battery is rotated during discharge operation, the bromine complex can uniformly be supplied to all over the electrode surfaces.

(3) The diffusion rate of bromine complex seems to be proportional to the peripheral rotative speed of the electrode and the effective rotation area on the electrode. The peripheral rotative speed of the 40-cm dia. electrode of the second embodiment is 40 times higher than that of the 1-cm dia. electrode of the first embodiment when the battery is rotated at the same rotational speed. Further, the effective rotation area of the 40-cm dia. electrode is much wider than that of the 1-cm dia. electrode. An increase in electrode diameter of the second embodiment may be effective upon a remarkable decrease in rotational speed of the battery.

As described above, in the rotary zinc-bromine secondary battery, since the battery body or the battery electrodes are cylindrical or circular in shape and further the electrolyte is hermetically inserted in the battery body, the battery or the electrodes are smoothly rotatable during either or both of charge and discharge operations. When the battery is rotated during charge and/or discharge operation, since the bromine complex can uniformly be diffused on the electrodes, it is possible to improve the battery energy efficiency, as compared with the static battery, without producing zinc dendrite and increasing overvoltage, in spite of the fact that no electrolyte circulating system is incorporated with the battery.

**Claims**

1. A zinc-bromine battery having positive and negative electrodes arranged in a battery body filled with at least one electrolyte, characterized in that the electrolyte is hermetically put within the battery body and the battery is rotated during charge and/or discharge operation.

2. The zinc-bromine battery as set forth in claim 1, wherein a rotative speed of said battery is 1000 r.p.m. or more where a diameter of the electrodes is approximately 1 cm.

3. The zinc-bromine battery as set forth in claim 1, wherein a rotative speed of said battery is 2 r.p.m. or more where a diameter of the electrodes is approximately 40 cm.

4. The zinc-bromine battery as set forth in claim 1, wherein only electrodes are rotated within the battery body during charge and/or discharge operation.

5. The zinc-bromine battery as set forth in claim 1, wherein the electrodes are circular in shape.

6. The zinc-bromine battery as set forth in claim 1, wherein the positive and negative electrodes are made of an electrically conductive plastic material.

7. The zinc-bromine battery as set forth in claim 6, wherein only the positive electrode is covered by a porous sheet fabric of active carbon fibers made from phenol resin fibers.

8. The zinc-bromine battery as set forth in claim 1, wherein applied to a power source for an electric vehicle, said battery is rotated by a driven shaft of an electric vehicle dc motor.

# FIG. 1

## ( PRIOR ART )

( IN CHARGE )

$$Zn^{++} + 2\bar{e} \longrightarrow Zn \qquad 2B\bar{r} \longrightarrow Br_2 + 2\bar{e} \qquad ZnBr_2 \longrightarrow Zn + Br_2$$

# FIG. 2

30A    23

31A    26

24    24

# FIG. 3

IV

32

27

34

28

35

33

IV

# FIG. 4

# FIG. 5

# FIG. 6

# FIG. 7

# FIG. 8

# FIG. 9

# FIG. 10